# EUROPEAN PATENT APPLICATION

(11) **EP 4 794 287 A1**
(43) Date of publication of application: **19.08.2026**
(21) Application number: 24876478.9
(22) Date of filing: 08.10.2024
(51) Int. Cl.: H04L 41/14

(54) **DATA PROCESSING METHOD AND APPARATUS, TERMINAL, AND NETWORK SIDE DEVICE**

(30) Priority: 09.10.2023 CN 202311299518
(71) Applicant: Vivo Mobile Communication Co., Ltd., Dongguan, Guangdong 523863 (CN)
(72) Inventor: SONG, Erhao, Dongguan, Guangdong 523863 (CN)
(74) Representative: Lavoix
(86) International application number: PCT/CN2024/123297
(87) International publication number: WO 2025/077664

(57) **Abstract**

Disclosed are a data processing method and apparatus, a terminal, and a network-side device, which belong to the field of communication technologies. The data processing method provided in embodiments of this application includes: A terminal performs a first operation, where the first operation includes at least one of the following: receiving first configuration information from a network-side device, and collecting first data in a case that at least one target condition in a data collection condition is satisfied, where the first configuration information is used for configuring the data collection condition; receiving a reporting condition from the network-side device, and reporting, based on the reporting condition, the first data collected by the terminal to the network-side device; and performing model inference based on a target model in a case that a model inference condition is satisfied, where the first data is used for training an artificial intelligence AI model, to obtain the target model.

## Description

### CROSS-REFERENCE TO RELATED APPLICATIONS

This application claims the priority of Chinese Patent Application No. 202311299518.5 filed on October, 09, 2023, which is incorporated herein by reference in its entirety.

### TECHNICAL FIELD

This application belongs to the field of communication technologies, and specifically relates to a data processing method and apparatus, a terminal, and a network-side device.

### BACKGROUND

Currently, artificial intelligence (Artificial Intelligence, AI) has been widely used in various fields. Integrating artificial intelligence into wireless communication networks to significantly improve technical indicators, such as a throughput, a latency, and a user capacity, is a key task for future wireless communication networks. To apply AI models to wireless communication networks, training data for the AI models needs to be collected and reported. In addition, inference timing of the AI models needs to be clearly defined. Therefore, how to apply AI models to wireless communication networks has become a problem that needs to be addressed urgently.

### SUMMARY

Embodiments of this application provide a data processing method and apparatus, a terminal, a network-side device, to address the problem of how to apply AI models to wireless communication networks.

According to a first aspect, a data processing method is provided, including:

A terminal performs a first operation, where the first operation includes at least one of the following:
receiving first configuration information from a network-side device, and collecting first data in a case that at least one target condition in a data collection condition is satisfied, where the first configuration information is used for configuring the data collection condition;
receiving a reporting condition from the network-side device, and reporting, based on the reporting condition, the first data collected by the terminal to the network-side device; and
performing model inference based on a target model in a case that a model inference condition is satisfied, where
the first data is used for training an artificial intelligence AI model, to obtain the target model.

According to a second aspect, a data processing method is provided, including:

A network-side device performs a second operation, where the second operation includes at least one of the following:
sending first configuration information to a terminal, where the first configuration information is used for configuring a data collection condition for performing first data collection;
sending a reporting condition to the terminal, where the reporting condition is used for triggering the terminal to report collected first data; and
sending a model inference condition to the terminal, where the model inference condition is used for triggering the terminal to perform model inference based on a target model; and
the first data is used for training an artificial intelligence AI model, to obtain the target model.

According to a third aspect, a data processing apparatus is provided, including:
a first execution module, configured to perform a first operation, where the first operation includes at least one of the following:
receiving first configuration information from a network-side device, and collecting first data in a case that at least one target condition in a data collection condition is satisfied, where the first configuration information is used for configuring the data collection condition;
receiving a reporting condition from the network-side device, and reporting, based on the reporting condition, the first data collected by a terminal to the network-side device; and
performing model inference based on a target model in a case that a model inference condition is satisfied, where
the first data is used for training an artificial intelligence AI model, to obtain the target model.

According to a fourth aspect, a data processing apparatus is provided, including:
a second execution module, configured to perform a second operation, where the second operation includes at least one of the following:
sending first configuration information to a terminal, where the first configuration information is used for configuring a data collection condition for performing first data collection;
sending a reporting condition to the terminal, where the reporting condition is used for triggering the terminal to report collected first data; and
sending a model inference condition to the terminal, where the model inference condition is used for triggering the terminal to perform model inference based on a target model; and
the first data is used for training an artificial intelligence AI model, to obtain the target model.

According to a fifth aspect, a terminal is provided. The terminal includes a processor and a memory, where the memory stores a program or instructions runnable on the processor, and the program or instructions, when executed by the processor, implement the steps of the method according to the first aspect.

According to a sixth aspect, a terminal is provided, including a processor and a communication interface, where the communication interface is configured to perform a first operation, and the first operation includes at least one of the following:
receiving first configuration information from a network-side device, and collecting first data in a case that at least one target condition in a data collection condition is satisfied, where the first configuration information is used for configuring the data collection condition;
receiving a reporting condition from the network-side device, and reporting, based on the reporting condition, the first data collected by a terminal to the network-side device; and
performing model inference based on a target model in a case that a model inference condition is satisfied, where
the first data is used for training an artificial intelligence AI model, to obtain the target model.

According to a seventh aspect, a network-side device is provided. The network-side device includes a processor and a memory, where the memory stores a program or instructions runnable on the processor, and the program or instructions, when executed by the processor, implement the steps of the method according to the second aspect.

According to a tenth aspect, a network-side device is provided, including a processor and a communication interface, where the communication interface is configured to perform a second operation, and the second operation includes at least one of the following:
sending first configuration information to a terminal, where the first configuration information is used for configuring a data collection condition for performing first data collection;
sending a reporting condition to the terminal, where the reporting condition is used for triggering the terminal to report collected first data; and
sending a model inference condition to the terminal, where the model inference condition is used for triggering the terminal to perform model inference based on a target model; and
the first data is used for training an artificial intelligence AI model, to obtain the target model.

According to a ninth aspect, a readable storage medium is provided. The readable storage medium stores a program or instructions, and the program or instructions, when executed by a processor, implement the steps of the method according to the first aspect, or implement the steps of the method according to the second aspect.

According to a tenth aspect, a wireless communication system is provided, including: a terminal and a network-side device, where the terminal may be configured to perform the steps of the method according to the first aspect, and the network-side device may be configured to perform the steps of the method according to the second aspect.

According to an eleventh aspect, a chip is provided. The chip includes a processor and a communication interface, where the communication interface is coupled to the processor, and the processor is configured to run a program or instructions to implement the method according to the first aspect, or to implement the method according to the second aspect.

According to a twelfth aspect, a computer program/program product is provided. The computer program/program product is stored in a storage medium, and the program/program product is executed by at least one processor to implement the method according to the first aspect, or to implement the method according to the second aspect.

In embodiments of this application, the terminal performs the first operation. The first operation includes at least one of the following: receiving the first configuration information from the network-side device, and collecting the first data in a case that the at least one target condition in the data collection condition is satisfied, where the first configuration information is used for configuring the data collection condition; receiving the reporting condition from the network-side device, and reporting, based on the reporting condition, the first data collected by the terminal to the network-side device; and performing model inference based on the target model in a case that the model inference condition is satisfied, where the first data is used for training the artificial intelligence AI model, to obtain the target model. In this way, because it is defined that the first data is collected based on the data collection condition, the first data is reported based on the reporting condition, and model inference is performed based on the model inference condition, an AI model can be applied to a wireless communication network, to improve communication performance of the wireless communication network.

### BRIEF DESCRIPTION OF THE DRAWINGS

FIG. 1 is a block diagram of a wireless communication system to which embodiments of this application are applicable.
FIG. 2 is a structural diagram of a neuron in a neural network.
FIG. 3 is a flowchart of a data processing method according to an embodiment of this application.
FIG. 4 is a flowchart of another data processing method according to an embodiment of this application.
FIG. 5 is a structural diagram of a data processing apparatus according to an embodiment of this application.
FIG. 6 is a structural diagram of another data processing apparatus according to an embodiment of this application.
FIG. 7 is a structural diagram of a communication device according to an embodiment of this application.
FIG. 8 is a structural diagram of a terminal according to an embodiment of this application.
FIG. 9 is a structural diagram of a network-side device according to an embodiment of this application.

### DETAILED DESCRIPTION

The terms "first", "second", and the like in this application are used to distinguish similar objects, but are not used to describe a specific sequence or order. It should be understood that terms used in this way are interchangeable in appropriate circumstances, so that embodiments of this application can be implemented in other orders than the order illustrated or described herein. In addition, objects distinguished by "first" and "second" are usually objects of one class with a quantity of objects unlimited. For example, a first object can indicate one or more first objects. In addition, "or" in this application indicates at least one of connected objects. For example, "A or B" covers three solutions, to be specific, a solution 1: including A and excluding B; a solution 2: including B and excluding A; and a solution 3: including both A and B. The character "/" generally indicates an "or" relationship between the associated objects.

The term "indication" in this application may be a direct indication (or an explicit indication), or may be an indirect indication (or an implicit indication). The direct indication may be understood as that a sender explicitly notifies a receiver of content such as specific information, an operation that needs to be performed, or a request result in a sent indication. The indirect indication may be understood as that a receiver determines corresponding information based on an indication sent by a sender, or performs determination and determines, based on a determination result, an operation that needs to be performed or a request result.

It should be noted that the technologies described in embodiments of this application are not limited to a long term evolution (Long Term Evolution, LTE)/LTE-advanced (LTE-Advanced, LTE-A) system, and may further be used in another wireless communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in embodiments of this application are often used interchangeably, and the described technology can be applied to the systems and radio technologies mentioned above, and can further be applied to other systems and radio technologies. The following description describes a new radio (New Radio, NR) system for illustrative purposes and uses the term NR for much of the following description. However, these technologies may further be used in systems other than the NR system, such as 6^{th} generation (6^{th} Generation, 6G) communication systems.

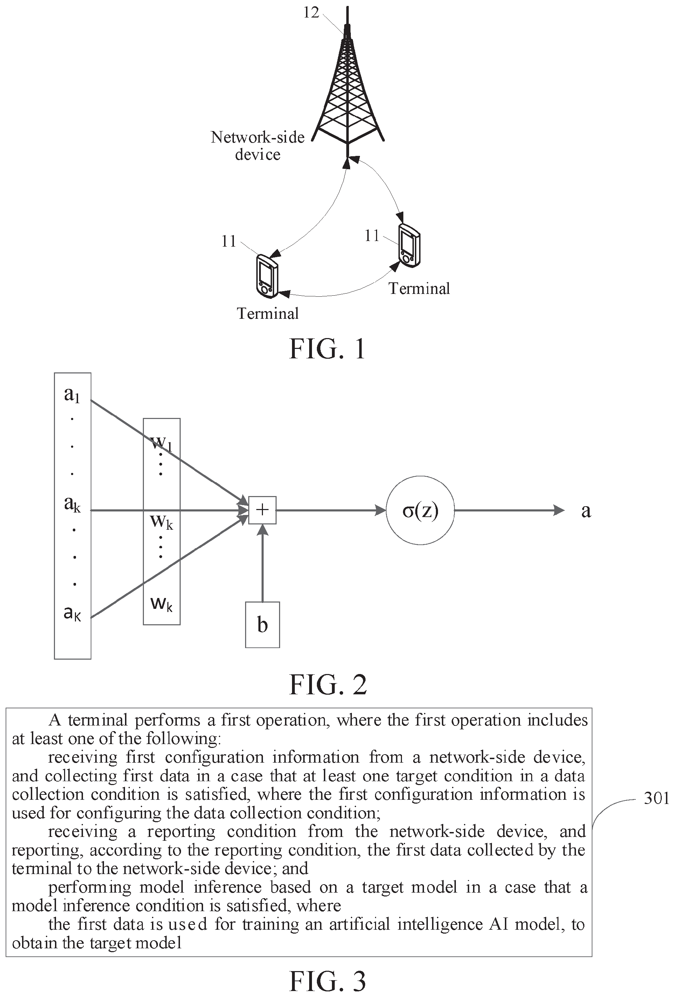

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), a ship-borne device, pedestrian user equipment (Pedestrian User Equipment, PUE), a smart home appliance (a home device having a wireless communication function, such as a refrigerator, a television, a washing machine, or furniture), a gaming console, a personal computer (Personal Computer, PC), a teller machine, or a self-service machine. The wearable device includes: a smartwatch, a smart bracelet, a smart earphone, smart glasses, smart jewelry (including a smart bangle, a smart chain bracelet, a smart ring, a smart necklace, a smart anklet, a smart anklet chain, and the like), a smart wristband, smart clothing, and the like. The vehicle user equipment may alternatively be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in embodiments of this application. The network-side device 12 may include an access network device or a core network device. The access network device may alternatively be referred to as a radio access network (Radio Access Network, RAN) device, a radio access network function, or a radio access network unit. The access network device may include a base station, a wireless local area network (Wireless Local Area Network, WLAN) access point (Access Point, AP), a Wireless Fidelity (Wireless Fidelity, WiFi) node, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP), or another suitable term in the field. As long as the same technical effects are achieved, the base station is not limited to a specific technical term. It should be noted that in embodiments of this application, the base station in the NR system is used merely as an example for description, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, the core network device in the NR system is used merely as an example for description, and a specific type of the core network device is not limited.

For ease of understanding, content involved in embodiments of this application is described below.

### I. Artificial intelligence

Currently, artificial intelligence has been widely used in various fields. An AI module (or an AI model) is implemented in a plurality of manners, for example, by using a neural network, a decision tree, a support vector machine, and a Bayes classifier. In this application, a neural network is used as an example for description, but a specific type of the AI module is not limited.

Optionally, the neural network is composed of neurons. FIG. 2 is a diagram of neurons. In the figure, al, a2, ..., aK denote inputs, w denotes a weight, namely, a multiplicative coefficient, b denotes a bias, namely, an additive coefficient, and σ(.) denotes an activation function. Common activation functions include Sigmoid, tanh, a rectified linear unit (Rectified Linear Unit, ReLU), and the like. *z=a*₁*w*₁ *+*···*+aₖwₖ +*···*+a_{K}w_{K} + b.*

Parameters of the neural network are optimized by using an optimization algorithm. The optimization algorithm refers to an algorithm capable of minimizing or maximizing an objective function. The objective function may alternatively be referred to as a loss function. The objective function is typically a mathematical combination of model parameters and data. For example, data X and a label Y corresponding to the data are given, and one neural network model f(.) is constructed. Through the model, a predicted output f(x) can be obtained after x is inputted. In addition, a difference (f(x)-Y) between a predicted value and a real value can be calculated, which is referred to as the loss function. The objective of this application is to find proper W, b to minimize the value of the loss function. A smaller loss value indicates that the model is closer to the real situation.

Currently common optimization algorithms are mostly based on an error back propagation (error Back Propagation, BP) algorithm. A basic idea of the BP algorithm is that a learning process includes two processes: forward propagation of a signal and back propagation of an error. During forward propagation, an input sample is transferred from an input layer to an output layer after being processed by hidden layers. If an actual output of the output layer is inconsistent with an expected output, back propagation of an error is performed. Error back propagation is to transmit an output error layer by layer to the input layer through the hidden layers in a form for back propagation, and allocate the error to all units of the layers, to obtain error signals of the units of the layers. The error signals are used as bases for correcting weights of the units. Such a process of adjusting the weights of the layers that involves signal forward propagation and error back propagation is performed iteratively. A process of continuously adjusting a weight is referred to as a learning and training process of a network. This process is performed until an error outputted by the network is reduced to an acceptable degree, or until learning is performed for a preset quantity of times.

Common optimization algorithms include gradient descent (Gradient Descent), stochastic gradient descent (Stochastic Gradient Descent, SGD), mini-batch gradient descent (mini-batch gradient descent), momentum (Momentum), stochastic gradient descent with momentum (Nesterov), adaptive gradient descent (ADAptive GRADient descent, Adagrad), Adadelta, root mean square prop (root mean square prop, RMSprop), adaptive moment estimation (Adaptive Moment Estimation, Adam), and the like.

During error back propagation, in the optimization algorithms, a derivative or partial derivative of a current neuron is obtained based on an error or a loss obtained by using the loss function, a gradient is obtained with reference to factors such as a learning rate, a previous gradient, the derivative, or the partial derivative, and the gradient is transmitted to a previous layer.

### II. AI model

In this application, the AI model may be referred to as an AI unit, a machine learning (Machine Learning, ML) model, an ML unit, an AI structure, an AI function, an AI feature, a neural network, a neural network function, a neural network function, or the like. Alternatively, the AI model may refer to a processing unit capable of implementing a specific algorithm, formula, processing procedure, capability, and the like related to AI. Alternatively, the AI model may be a processing method, algorithm, function, module, or unit for a specific data set. Alternatively, the AI model may be a processing method, algorithm, function, module, or unit running on hardware related to AI or ML, such as a graphics processing unit (Graphics Processing Unit, GPU), a neural processing unit (Neural Processing Unit, NPU), a tensor processing unit (Tensor Processing Unit, TPU), or an application specific integrated circuit (Application Specific Integrated Circuit, ASIC). This is not further limited herein.

Optionally, the specific data set includes at least one of an input and an output of the AI model.

Optionally, an identifier of the AI model may be an AI model identifier, an AI structure identifier, an AI algorithm identifier, an identifier of a specific data set associated with the AI model, an identifier of a specific scenario, environment, channel feature, or device related to AI or ML, or an identifier of a function, feature, capability, or module related to AI or ML. This is not further limited herein.

### III. AI-based mobility management

Current main research directions of AI-based mobility management include:
Prediction of a target cell or a target beam: For example, an optimal target cell or target beam for a future moment is predicted based on a historical measurement result of a serving cell or a neighboring cell and other auxiliary information, so as to perform handover to the target cell or the target beam in advance.

Prediction of signal quality of a target cell or a target beam: for example, signal quality of the target cell or the target beam for a future moment is predicted based on a historical measurement result of a serving cell or a neighboring cell and other auxiliary information, and an optimal target cell or target beam is determined based on the predicted signal quality, so as to perform handover to the target cell or target beam in advance.

Prediction of an abnormal handover event: For example, a handover abnormal event that may occur at a future moment is predicted based on a historical measurement result of a serving cell or a neighboring cell and other auxiliary information, so as to adjust a handover policy to avoid occurrence of the abnormal handover event.

Through AI-based mobility prediction, handover issues, such as premature handover, delayed handover, ping-pong handover, handover to a wrong cell, and a prolonged handover latency, can be avoided.

To reduce running power consumption of the AI model, the AI-based mobility function should be used in a scenario where a handover issue exists or a handover issue may exist. In embodiments of this application, a data processing method is provided for the AI-based mobility management function, to determine a scenario where data collection, data reporting, and model inference are to be performed.

The data processing method provided in embodiments of this application will be described in detail below with reference to the drawings through some embodiments and application scenarios thereof.

Refer to FIG. 3. Embodiments of this application provide a data processing method. As shown in FIG. 3, the data processing method includes:
Step 301: A terminal performs a first operation, where the first operation includes at least one of the following:
receiving first configuration information from a network-side device, and collecting first data in a case that at least one target condition in a data collection condition is satisfied, where the first configuration information is used for configuring the data collection condition;
receiving a reporting condition from the network-side device, and reporting, based on the reporting condition, the first data collected by the terminal to the network-side device; and
performing model inference based on a target model in a case that a model inference condition is satisfied, where
the first data is used for training an artificial intelligence AI model, to obtain the target model.

In embodiments of this application, the first configuration information is used for configuring at least one data collection condition, and the target condition refers to some or all of the at least one configured data collection condition. The network-side device configures the data collection condition for the terminal, so that the terminal can collect the first data after the corresponding data collection condition is satisfied. In this way, excessive data collection can be avoided, thereby improving targeting of data collection, and further improving prediction accuracy of the trained AI model. In addition, power consumption of the terminal for data collection and signaling overheads when the terminal reports the collected data are reduced.

It should be understood that the collecting the first data in a case that the at least one target condition is satisfied may be understood as: collecting the first data in a case that some or all of M target conditions are satisfied, where M is a positive integer. For example, when M is greater than 1, it may be understood as triggering collection of the first data in a case that any one of the M target conditions is satisfied. Alternatively, it may be understood as triggering collection of the first data in a case that N target conditions are satisfied at the same time, where N is an integer less than or equal to M, and N is greater than 1.

Optionally, in a case that the first operation performed by the terminal includes collection of the first data, after the first data is collected, the first data may be used as sample data for training the AI model on the terminal or the network-side device. After the AI model is trained, the terminal may perform model inference through the trained AI model, to obtain an inference result, and finally, perform another function (such as beam management and inter-frequency prediction) of AI-based mobility management or non-mobility management based on the inference result.

It should be noted that in embodiments of this application, the network-side device may train the AI model, or the terminal may train the AI model. Optionally, when the network-side device trains the AI model, the terminal needs to report the collected first data to the network-side device. The network-side device configures the reporting condition for the terminal. The terminal may report, based on the reporting condition, the first data in a case that the corresponding reporting condition is satisfied. Optionally, the reporting condition may represent a condition for triggering reporting, and the terminal is triggered to report the first data when the reporting condition is satisfied. The network-side device may perform model training based on the reported first data, and deliver the trained target model to the terminal after completing model training. The terminal may perform model inference based on the target model to obtain an inference result, and finally perform another function of AI-based mobility management or non-mobility management based on the inference result.

Optionally, the terminal may obtain model input data used for mobility management, and then input the model data into the target model for model inference, to obtain an inference result. The inference result may include information such as an identifier of a cell for handover and an instruction of whether to perform handover. The terminal performs a related process based on the inference result.

In some embodiments, the target model may be an AI model configured for mobility management. In this case, handover performance may be optimized. In addition, the target model may alternatively be an AI model configured for non-mobility management.

For example, in a mobility management process, currently, handover is usually performed based on signal quality of a cell. However, in some scenarios, due to unstable signal quality of a cell, handover issues, such as premature handover, delayed handover, ping-pong handover, handover to a wrong cell, and a prolonged handover latency, are easily caused. When mobility management is performed based on the AI model, whether to perform cell handover and a target cell for handover may be determined based on the model inference result, so as to perform a procedure related to mobility management, for example, initiate a handover procedure. In this way, handover issues, such as premature handover, delayed handover, ping-pong handover, handover to a wrong cell, and a prolonged handover latency, can be avoided. Therefore, in embodiments of this application, the AI model may be applied to mobility management, to improve mobility management performance.

For example, in a conventional beam management process, the terminal needs to scan and measure all beams to determine an optimal beam. A latency in determining the optimal beam is excessively high, and too much measurement causes large power consumption of the terminal. In AI-based beam management, an optimal beam or signal quality of an optimal beam of a serving cell is predicted based on some beam measurement results of the serving cell, to reduce power consumption and a latency during beam measurement.

For example, in a conventional measurement process, the terminal needs to measure signal quality of an inter-frequency cell within a measurement interval configured by a network. Within the measurement interval, the terminal cannot receive and send data, and inter-frequency measurement causes power consumption and data interruption of the terminal. In AI-based inter-frequency prediction, the terminal predicts signal quality of an inter-frequency cell based on a measurement result of an intra-frequency cell, to reduce power consumption and data interruption caused when the terminal performs inter-frequency measurement.

It should be understood that, in the embodiments of this application, the first data reported by the terminal may be first data on which data collection is performed based on the target condition, or may be first data on which data collection is not performed based on the target condition. This is not further limited herein.

Optionally, the model inference condition may be configured by the network-side device or specified in a protocol. In a case that the terminal determines that the model inference condition is satisfied, the terminal may perform model inference. Because the terminal is triggered to perform model inference based on the model inference condition, timing for the terminal to perform model inference can be defined. In addition, power consumption of the terminal caused by excessively frequent model inference can be reduced.

It should be understood that the first data may be used for initial training or re-training of the target model.

In embodiments of this application, the terminal performs the first operation. The first operation includes at least one of the following: receiving the first configuration information from the network-side device, and collecting the first data in a case that the at least one target condition in the data collection condition is satisfied, where the first configuration information is used for configuring the data collection condition; receiving the reporting condition from the network-side device, and reporting, based on the reporting condition, the first data collected by the terminal to the network-side device; and performing model inference based on the target model in a case that the model inference condition is satisfied, where the first data is used for training the artificial intelligence AI model, to obtain the target model. In this way, because it is defined that the first data is collected based on the data collection condition, the first data is reported based on the reporting condition, and model inference is performed based on the model inference condition, an AI model can be applied to a wireless communication network, to improve communication performance of the wireless communication network.

Optionally, when the AI model is applied to mobility management, to reduce overheads of reporting the first data, the AI-based mobility function should be used in a scenario where a handover issue exists or a handover issue may exist. In addition, a scenario where reporting is to be performed may be further determined by using the data processing method provided in embodiments of this application. For example, in some embodiments, the reporting condition includes at least one of the following:
a target timer expires, where the target timer is started or restarted in a case that the target condition is satisfied, and running duration of the target timer indicates continuous collection duration of the first data;
a data volume of the collected first data is greater than a preset threshold;
the network-side device indicates that reporting is based on implementation of the terminal;
cell selection occurs;
cell re-selection occurs;
cell handover occurs;
radio resource control (Radio Resource Control, RRC) connection establishment occurs;
RRC re-establishment occurs;
RRC connection resume occurs;
N handover failures or N abnormal handover events occur, where N is a positive integer; and
the terminal leaves a cell list configured by the network-side device.

In embodiments of this application, the collected first data may be reported after the reporting condition is satisfied, or the collected first data may be reported in an uplink resource subsequently allocated by the network-side device after the reporting condition is satisfied. It should be understood that in another embodiment, the reporting condition may alternatively be specified in a protocol.

It should be understood that the target timer may be started or restarted in a case that a target condition is satisfied. For example, the target timer may be started in a case that a target condition is satisfied. During running of the target timer, the target timer may be restarted in a case that another target condition is satisfied. Alternatively, the target timer may be started in a case that all target conditions are satisfied. Because the target timer is configured to determine reporting timing, the timing duration of the target timer may be set, to make the reported first data satisfy a data volume required by model training. In addition, timeliness of the first data used for model training can be ensured, thereby improving prediction accuracy of the trained model. In addition, problems of power consumption of the terminal and large memory occupation that are caused by an excessively long collection time of the first data can be avoided.

Optionally, in a case that the reporting condition includes that the data volume of the collected first data is greater than the preset threshold, the terminal may report the first data when the data volume of the collected first data is greater than the preset threshold. In this way, the reported first data can satisfy the data volume required by model training. In addition, timeliness of the first data used for model training can be ensured, thereby improving prediction accuracy of the trained model. In addition, large memory occupation caused by collection of the first data can be avoided.

Optionally, in a case that the reporting condition includes that the network-side device indicates that reporting is based on implementation of the terminal, the terminal can autonomously perform reporting according to an actual situation when receiving an indication of reporting based on implementation of the terminal from the network-side device, thereby improving reporting flexibility of the first data. It should be understood that, when reporting is implemented based on the terminal, the terminal may perform reporting at any time, that is, the terminal performs reporting autonomously. In this case, the terminal may indicate reporting to the network-side device.

Optionally, in a case that the reporting condition includes that cell selection occurs, cell re-selection occurs, cell handover occurs, RRC connection establishment occurs, RRC re-establishment occurs, or RRC connection resume occurs, reporting may be performed after the cell selection occurs, the cell re-selection occurs, the cell handover occurs, the RRC connection establishment occurs, the RRC re-establishment occurs, or the RRC connection resume occurs. In this way, the first data can be reported in time, and the target model can be trained or retrained, whereby improving prediction accuracy of the AI model.

Optionally, in a case that the reporting condition includes that N handover failures or N abnormal handover events occur, the terminal may record a quantity of handover failures or abnormal handovers, and report the first data when the quantity reaches N. In this way, the reported first data can satisfy the data volume required by model training. In addition, timeliness of the first data used for model training can be ensured, thereby improving prediction accuracy of the trained model.

Optionally, the reported first data is used for training the model, and is used for predicting a cell in a cell list, rather than a cell out of the cell list. In this way, in a case that the reporting condition includes that the terminal leaves the cell list configured by the network-side device, the terminal may report the collected first data when handing over to or reselecting another cell out of the cell list, to avoid reporting invalid first data collected after the terminal hands over to the another cell. Therefore, validity of the reported first data is improved.

It should be understood that the reporting condition may include one or more of the foregoing conditions. For example, the reporting condition includes L conditions, where L is a positive integer. In a case that L is greater than 1, the terminal may be triggered to report the first data to the network-side device when any one of the conditions is satisfied. Alternatively, the terminal may be triggered to report the first data to the network-side device when at least two of the conditions are simultaneously satisfied.

It should be noted that, in another embodiment, the terminal may alternatively periodically report the first data, for example, may periodically report the first data according to a reporting period configured by the network-side device. In addition, the terminal may alternatively report according to a request of the network-side device. For example, the network-side device may send a first data reporting request to the terminal, and the terminal reports the collected first data based on the request.

Optionally, when the AI model is applied to mobility management, to reduce running power consumption of the AI model, in embodiments of this application, the data collection condition and the model inference condition when the AI-based mobility management function is used are defined. For example, in some embodiments, at least one of the data collection condition and the model inference condition includes at least one of the following:
condition 1: a position of the terminal falls within a preset range;
condition 2: an average velocity of the terminal exceeds a first threshold or falls within a first range in a configured time window;
condition 3: a velocity of the terminal continuously exceeds a second threshold or falls within a second range in the configured time window;
condition 4: signal quality of a serving cell is less than or equal to a third threshold or falls within a third range;
condition 5: signal quality of a neighboring cell is greater than or equal to a fourth threshold or falls within a fourth range;
condition 6: the signal quality of the neighboring cell is higher than the signal quality of the serving cell, and a difference between the signal quality of the neighboring cell and the signal quality of the serving cell is greater than or equal to a fifth threshold or falls within a fifth range;
condition 7: average signal quality of the serving cell is less than or equal to a sixth threshold or falls within a sixth range in the configured time window;
condition 8: average signal quality of the neighboring cell is greater than or equal to a seventh threshold or falls within a seventh range in the configured time window;
condition 9: the average signal quality of the neighboring cell is higher than the average signal quality of the serving cell in the configured time window, and a difference between the average signal quality of the neighboring cell and the average signal quality of the serving cell is greater than or equal to an eighth threshold or falls within an eighth range;
condition 10: the signal quality of the serving cell is continuously less than a ninth threshold or falls within a ninth range in the configured time window;
condition 11: the signal quality of the neighboring cell is continuously less than a tenth threshold or falls within a tenth range in the configured time window;
condition 12: a quantity of abnormal handover events that occur on the terminal is greater than or equal to an eleventh threshold in the configured time window;
condition 13: a ratio of the quantity of abnormal handover events that occur on the terminal to a total quantity of handovers is greater than or equal to a twelfth threshold in the configured time window;
condition 14: signal quality of the terminal in the serving cell drops by X dB in the configured time window; and
condition 15: the signal quality of the terminal in the neighboring cell rises by Y dB in the configured time window.

In embodiments of this application, because the data collection condition is defined, collection of invalid first data can be avoided, and accuracy of AI model training is improved. In addition, because the model inference condition is defined, power consumption caused by ineffective model inference can be reduced.

Optionally, for the condition 1, the terminal may perform mobility management in a specified range through the AI model, to improve reliability of mobility management in the specified range. The network-side device may flexibly specify a range in which mobility management needs to be performed through the AI model, thereby improving flexibility of mobility management performed through the AI model, and reducing power consumption caused by ineffective model inference.

For the condition 2 and the condition 3, the terminal may perform mobility management on a high-velocity moving terminal through the AI model, to avoid premature handover, delayed handover, ping-pong handover, or handover to a wrong cell for the high-velocity moving terminal.

For the condition 4 to the condition 11, the condition 14, and the condition 15, the terminal may determine, based on the signal quality of the serving cell and the signal quality of the neighboring cell, whether to perform mobility management through the AI model. In this way, in a case that the signal quality of the serving cell is poor and the signal quality of the neighboring cell is good, ping-pong handover or handover to a wrong cell for the terminal can be avoided.

For the condition 12 and the condition 13, the terminal may determine, based on the quantity of abnormal handover events and the ratio, whether to perform mobility management through the AI model, so as to determine a target cell for handover based on a model inference result. In this way, the quantity of abnormal handover events is reduced, to avoid a prolonged handover latency.

It should be understood that the condition included in the data collection condition may be the same as or different from the condition included in the model inference condition. In a case that the condition included in the data collection condition is the same as the condition included in the model inference condition, model inference may be performed based on a current target model when the target condition is satisfied, and the first data is collected at the same time. The collected first data is used for subsequently re-training the target model to update the current target model.

Optionally, the preset range may be a longitude and latitude range configured by the network-side device, and X and Y are constants.

It should be noted that in embodiments of this application, duration corresponding to the continuation may be understood as all duration of the configured time window, or may be understood as partial duration of the configured time window. For example, that the velocity of the terminal continuously exceeds the second threshold in the configured time window may be understood as that the average velocity of the terminal exceeds the second threshold in the configured time window, or duration in which the average velocity of the terminal exceeds the second threshold in the configured time window is greater than preset duration (such as half duration of the configured time window).

Optionally, the abnormal handover events may include ping-pong handover, premature handover, delayed handover, handover to a wrong cell, a handover failure, a radio link failure, and the like.

Optionally, a proportion of the abnormal handover events that occur on the terminal may be understood as a ratio obtained by dividing a quantity of abnormal handovers by the total quantity of handovers.

Optionally, the method further includes:
The terminal stops collection of the first data when a collection stopping condition is satisfied, where the collection stopping condition includes at least one of the following:
the target condition is not satisfied; and
the target timer expires, where the target timer is started or restarted in a case that the target condition is satisfied, and the running duration of the target timer indicates the continuous collection duration of the first data.

In embodiments of this application, the collection stopping condition matches the data collection condition. Specifically, that collection of the first data is stopped in a case that the collection stopping condition is satisfied may be understood as at least one of the following:
collection of the first data is triggered in a case that any one of the M target conditions is satisfied, and collection of the first data is stopped in a case that all of the M target conditions are not satisfied; and
collection of the first data is triggered in a case that the N target conditions in the M target conditions are satisfied, and collection of the first data is stopped in a case that a quantity of target conditions that are satisfied is less than N (a quantity of target conditions that are not satisfied is greater than M-N).

In embodiments of this application, because the collection stopping condition for the first data is defined, collection of invalid first data can be avoided. Therefore, power consumption of the terminal can be reduced.

In some embodiments, the first data includes at least one of the following:
signal quality of a first cell and a time stamp corresponding to the signal quality, where the first cell includes at least one of the serving cell, the neighboring cell, and a target cell;
target information of the terminal and a time stamp corresponding to the target information, where the target information includes at least one of a velocity, a position, a direction, and beam information;
an identifier of a second cell and a time stamp corresponding to the identifier of the second cell, where the second cell includes at least one of the serving cell, the neighboring cell, and the target cell;
a condition type of the target condition;
a quantity of abnormal handover events; and
a ratio of the quantity of abnormal handover events to a total quantity of handovers.

In embodiments of this application, the identifier of the second cell may include a physical cell identifier (Physical Cell Identifier, PCI), an NR cell global identifier (NR Cell Global Identifier, NCGI), and the like.

Optionally, the time stamp corresponding to the signal quality may be understood as time information when the signal quality is obtained. The time stamp corresponding to the target information may be understood as time information when the target information is obtained. The time stamp corresponding to the identifier of the second cell may be understood as time information when the signal quality of the second cell is obtained or time information when the second cell is selected. The reported first data includes the time stamp corresponding to the signal quality, the time stamp corresponding to the target information, and the time stamp corresponding to the identifier of the second cell, so that the network-side device can select, according to the time stamps, the corresponding signal quality, target information, and identifier of the second cell as sample data for model training. For example, relevant data within preset duration from a current time is selected for model training, thereby improving prediction accuracy of the trained model.

It should be noted that the signal quality includes a reference signal received power (Reference Signal Received Power, RSRP), reference signal received quality (Reference Signal Received Quality, RSRQ), a signal to interference plus noise ratio (Signal to Interference plus Noise Ratio, SINR), and the like of a cell or a beam in the cell.

Optionally, the time stamp may be represented by units such as year, month, day, hour, minute, second, millisecond, frame, sub-frame, slot, and symbol. Specifically, a time granularity of the time stamp may be a millisecond, a frame, a sub-frame, a slot, or a symbol.

In some embodiments, before model inference is performed based on the target model in a case that the model inference condition is satisfied, the method further includes:

The terminal receives second configuration information from the network-side device, where the second configuration information is used for determining an applicable range of target model inference.

The second configuration information satisfies any one of the following:
the second configuration information is used for configuring a frequency, a cell, or a cell list to which the target model is applicable;
the second configuration information includes first information, second information, and third information, or the second configuration information includes first information and second information, where the first information is used for configuring a plurality of cells, the second information is used for activating at least part of the plurality of cells, and the third information indicates a cell that is in the activated cells and to which the target model is applicable;
the second configuration information includes fourth information, fifth information, and sixth information, where the fourth information is used for configuring a plurality of cell lists, the fifth information is used for activating at least part of the plurality of cell lists, and the sixth information indicates a cell list that is in the activated cell lists and to which the target model is applicable;
the second configuration information is used for configuring at least one of the serving cell and first M neighboring cells ranked in descending order of predicted signal quality, to which the target model is applicable;
the second configuration information is used for configuring an intra-frequency cell to which the target model is applicable; and
the second configuration information is used for configuring first P neighboring cells of intra-frequency cells and inter-frequency cells that are ranked in descending order of signal quality, to which the target model is applicable, where P is a positive integer.

In embodiments of this application, in a case that the second configuration information is used for configuring the cell list to which the target model is applicable, the network-side device may indicate that a cell included in the cell list for inference may be a cell within a radio access network (Radio Access Network, RAN)-based notification area (RAN), a cell within a tracking area (Tracking Area, TA), a candidate cell for conditional handover (Conditional Handover, CHO), a candidate cell for conditional Pscell addition or change (Conditional Pscell Addition or Change, CPAC), or a candidate cell for L1/L2-triggered mobility (L1/L2-Triggered Mobility, LTM).

In some embodiments, the network-side device may configure a plurality of cells or cell lists through RRC signaling, and activate part of the cells or cell lists through a Media Access Control control element (Media Access Control Control Element, MAC CE) for model inference.

In some embodiments, the network-side device may configure a plurality of cells or cell lists through RRC signaling, activate part of the cells or cell lists through an MAC CE, and instruct, through downlink control information (Downlink Control Information, DCI), part of the cells or cell lists activated by the MAC CE to perform model inference.

In some embodiments, the cell list includes at least one of the following: a list of cells within the radio access network-based notification area RNA; a list of cells within the tracking area TA; candidate cells for conditional handover CHO; a list of candidate cells for conditional Pscell addition or change CPAC; and a list of candidate cells for L1/L2-triggered mobility LTM.

In some embodiments, the method further includes:

The terminal receives second data from the network-side device, where the second data is input data of the target model, and the second data includes at least one of the following:
position information of the network-side device;
an antenna orientation of the network-side device;
a beam orientation of the network-side device;
a beam width of the network-side device; and
an identifier associated with a transmission beam of the network-side device.

In embodiments of this application, the network-side device may send an input required by model inference to the terminal when delivering the target model or configuring the applicable range of model inference, or the terminal requests the network-side device to obtain a model input required by model inference.

In some embodiments, after the first data collected by the terminal is reported to the network-side device based on the reporting condition, the method further includes:

The terminal receives third information from the network-side device, where the third information is used for configuring the target model.

It should be understood that, if the network-side device sends the input required by model inference to the terminal when delivering the target model or configuring the applicable range of model inference, the second data may be carried in the second configuration information or the third configuration information.

For better understanding of this application, detailed description will be provided below through some examples.

In some embodiments, it is assumed that a network-side device performs model training, and a terminal side performs model inference, the following process may be included:
Step 0: A terminal receives a data collection condition configured by the network-side device. For example, the data collection condition is that signal quality of a serving cell is continuously less than X dB in a configured time window.
Step 1: The terminal satisfies a data collection condition, and collects and reports data.
Step 2: The terminal receives an AI model, a model inference condition, and an applicable range of AI model inference that are delivered by the network-side device.
Step 3: The terminal performs model inference within the applicable range of AI model inference after satisfying the model inference condition.

Optionally, before step 2 or step 3, the terminal requests the network-side device to obtain an input (such as second data) required by model inference, or the terminal receives an input required by model inference from the network-side device.

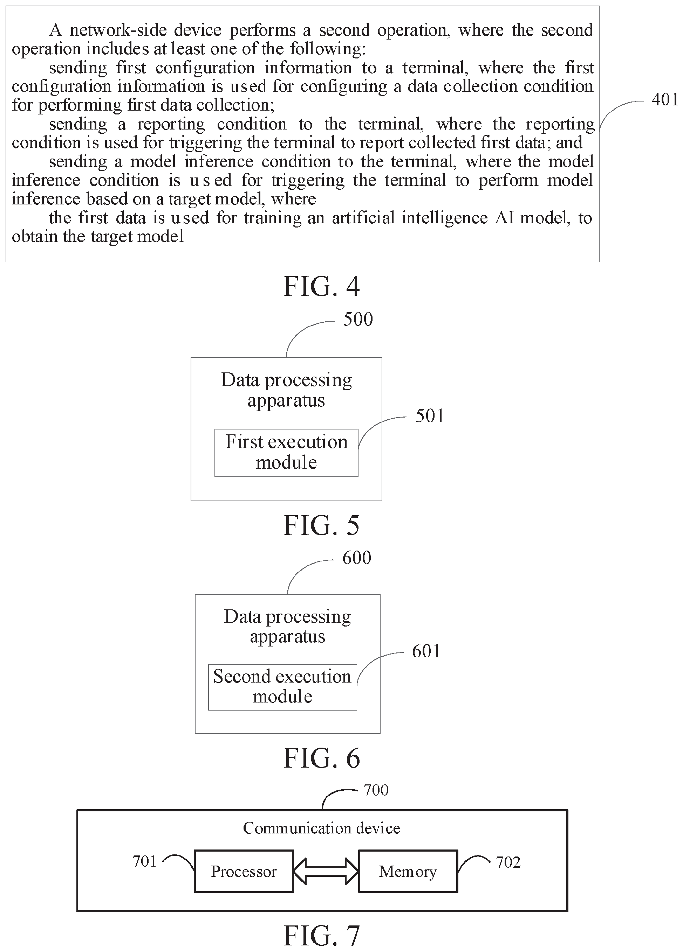

Refer to FIG. 4. Embodiments of this application further provide a data processing method. As shown in FIG. 4, the data processing method includes:
Step 401: A network-side device performs a second operation, where the second operation includes at least one of the following:
sending first configuration information to a terminal, where the first configuration information is used for configuring a data collection condition for performing first data collection;
sending a reporting condition to the terminal, where the reporting condition is used for triggering the terminal to report collected first data; and
sending a model inference condition to the terminal, where the model inference condition is used for triggering the terminal to perform model inference based on a target model; and
the first data is used for training an artificial intelligence AI model, to obtain the target model.

Optionally, the reporting condition includes at least one the following:
a target timer expires, where the target timer is started or restarted in a case that at least one target condition in the data collection condition is satisfied, and running duration of the target timer indicates continuous collection duration of the first data;
a data volume of the collected first data is greater than a preset threshold;
the network-side device indicates that reporting is based on implementation of the terminal;
cell selection occurs;
cell re-selection occurs;
cell handover occurs;
RRC connection establishment occurs;
RRC re-establishment occurs;
RRC connection resume occurs;
N handover failures or N abnormal handover events occur, where N is a positive integer; and
the terminal leaves a cell list configured by the network-side device.

Optionally, the cell list refers to a list used for controlling a reporting area of the first data.

Optionally, at least one of the data collection condition and the model inference condition includes at least one of the following:
a position of the terminal falls within a preset range;
an average velocity of the terminal exceeds a first threshold or falls within a first range in a configured time window;
a velocity of the terminal continuously exceeds a second threshold or falls within a second range in the configured time window;
signal quality of a serving cell is less than or equal to a third threshold or falls within a third range;
signal quality of a neighboring cell is greater than or equal to a fourth threshold or falls within a fourth range;
the signal quality of the neighboring cell is higher than the signal quality of the serving cell, and a difference between the signal quality of the neighboring cell and the signal quality of the serving cell is greater than or equal to a fifth threshold or falls within a fifth range;
average signal quality of the serving cell is less than or equal to a sixth threshold or falls within a sixth range in the configured time window;
average signal quality of the neighboring cell is greater than or equal to a seventh threshold or falls within a seventh range in the configured time window;
the average signal quality of the neighboring cell is higher than the average signal quality of the serving cell in the configured time window, and a difference between the average signal quality of the neighboring cell and the average signal quality of the serving cell is greater than or equal to an eighth threshold or falls within an eighth range;
the signal quality of the serving cell is continuously less than a ninth threshold or falls within a ninth range in the configured time window;
the signal quality of the neighboring cell is continuously less than a tenth threshold or falls within a tenth range in the configured time window;
a quantity of abnormal handover events that occur on the terminal is greater than or equal to an eleventh threshold in the configured time window;
a ratio of the quantity of abnormal handover events that occur on the terminal to a total quantity of handovers is greater than or equal to a twelfth threshold in the configured time window;
the signal quality of the serving cell for the terminal drops by X dB in the configured time window; and
the signal quality of the neighboring cell for the terminal rises by Y dB in the configured time window.

Optionally, the first data includes at least one of the following:
signal quality of a first cell and a time stamp corresponding to the signal quality, where the first cell includes at least one of the serving cell, the neighboring cell, and a target cell;
signal quality of a first cell and a time stamp corresponding to the signal quality, where the first cell includes at least one of the serving cell, the neighboring cell, and a target cell;
target information of the terminal and a time stamp corresponding to the target information, where the target information includes at least one of a velocity, a position, a direction, and beam information;
an identifier of a second cell and a time stamp corresponding to the identifier of the second cell, where the second cell includes at least one of the serving cell, the neighboring cell, and the target cell;
a condition type of the target condition;
a quantity of abnormal handover events; and
a ratio of the quantity of abnormal handover events to a total quantity of handovers.

Optionally, the method further includes:
The network-side device sends second configuration information to the terminal, where the second configuration information is used for determining an applicable range of target model inference.

The second configuration information satisfies any one of the following:
the second configuration information is used for configuring a frequency, a cell, or a cell list to which the target model is applicable;
the second configuration information includes first information, second information, and third information, or the second configuration information includes first information and second information, where the first information is used for configuring a plurality of cells, the second information is used for activating at least part of the plurality of cells, and the third information indicates a cell that is in the activated cells and to which the target model is applicable;
the second configuration information includes fourth information, fifth information, and sixth information, where the fourth information is used for configuring a plurality of cell lists, the fifth information is used for activating at least part of the plurality of cell lists, and the sixth information indicates a cell list that is in the activated cell lists and to which the target model is applicable;
the second configuration information is used for configuring at least one of the serving cell and first M neighboring cells ranked in descending order of predicted signal quality, to which the target model is applicable;
the second configuration information is used for configuring an intra-frequency cell to which the target model is applicable; and
the second configuration information is used for configuring first P neighboring cells of intra-frequency cells and inter-frequency cells that are ranked in descending order of signal quality, to which the target model is applicable, where P is a positive integer.

Optionally, the cell list includes at least one of the following: a list of cells within a radio access network-based notification area RNA; a list of cells within a tracking area TA; candidate cells for conditional handover CHO; a list of candidate cells for conditional Pscell addition or change CPAC; and a list of candidate cells for L1/L2-triggered mobility LTM.

Optionally, the method further includes:
The network-side device sends second data to the terminal, where the second data is input data of the target model, and the second data includes at least one of the following:
position information of the network-side device;
an antenna orientation of the network-side device;
a beam orientation of the network-side device;
a beam width of the network-side device; and
an identifier associated with a transmission beam of the network-side device.

Optionally, after the reporting condition is sent to the terminal, the method further includes:
The network-side device sends third configuration information to the terminal, where the third configuration information is used for configuring the target model.

The data processing method provided in embodiments of this application may be performed by a data processing apparatus. In embodiments of this application, the data processing apparatus provided in embodiments of this application is described by using an example in which the data processing apparatus performs the data processing method.

Refer to FIG. 5. Embodiments of this application further provide a data processing apparatus. As shown in FIG. 5, a data processing apparatus 500 includes:
a first execution module 501, configured to perform a first operation, where the first operation includes at least one of the following:
receiving first configuration information from a network-side device, and collecting first data in a case that at least one target condition in a data collection condition is satisfied, where the first configuration information is used for configuring the data collection condition;
receiving a reporting condition from the network-side device, and reporting, based on the reporting condition, the first data collected by a terminal to the network-side device; and
performing model inference based on a target model in a case that a model inference condition is satisfied, where
the first data is used for training an artificial intelligence AI model, to obtain the target model.

Optionally, the reporting condition includes at least one the following:
a target timer expires, where the target timer is started or restarted in a case that the target condition is satisfied, and running duration of the target timer indicates continuous collection duration of the first data;
a data volume of the collected first data is greater than a preset threshold;
the network-side device indicates that reporting is based on implementation of the terminal;
cell selection occurs;
cell re-selection occurs;
cell handover occurs;
RRC connection establishment occurs;
RRC re-establishment occurs;
RRC connection resume occurs;
N handover failures or N abnormal handover events occur, where N is a positive integer; and
the terminal leaves a cell list configured by the network-side device.

Optionally, the cell list refers to a list used for controlling a reporting area of the first data.

Optionally, at least one of the data collection condition and the model inference condition includes at least one of the following:
a position of the terminal falls within a preset range;
an average velocity of the terminal exceeds a first threshold or falls within a first range in a configured time window;
a velocity of the terminal continuously exceeds a second threshold or falls within a second range in the configured time window;
signal quality of a serving cell is less than or equal to a third threshold or falls within a third range;
signal quality of a neighboring cell is greater than or equal to a fourth threshold or falls within a fourth range;
the signal quality of the neighboring cell is higher than the signal quality of the serving cell, and a difference between the signal quality of the neighboring cell and the signal quality of the serving cell is greater than or equal to a fifth threshold or falls within a fifth range;
average signal quality of the serving cell is less than or equal to a sixth threshold or falls within a sixth range in the configured time window;
average signal quality of the neighboring cell is greater than or equal to a seventh threshold or falls within a seventh range in the configured time window;
the average signal quality of the neighboring cell is higher than the average signal quality of the serving cell in the configured time window, and a difference between the average signal quality of the neighboring cell and the average signal quality of the serving cell is greater than or equal to an eighth threshold or falls within an eighth range;
the signal quality of the serving cell is continuously less than a ninth threshold or falls within a ninth range in the configured time window;
the signal quality of the neighboring cell is continuously less than a tenth threshold or falls within a tenth range in the configured time window;
a quantity of abnormal handover events that occur on the terminal is greater than or equal to an eleventh threshold in the configured time window;
a ratio of the quantity of abnormal handover events that occur on the terminal to a total quantity of handovers is greater than or equal to a twelfth threshold in the configured time window;
the signal quality of the serving cell for the terminal drops by X dB in the configured time window; and
the signal quality of the neighboring cell for the terminal rises by Y dB in the configured time window.

Optionally, the method further includes:
The first execution module 501 is further configured to stop collection of the first data when a collection stopping condition is satisfied, where the collection stopping condition includes at least one of the following:
the target condition is not satisfied; and
the target timer expires, where the target timer is started or restarted in a case that the target condition is satisfied, and the running duration of the target timer indicates the continuous collection duration of the first data.

Optionally, the first data includes at least one of the following:
signal quality of a first cell and a time stamp corresponding to the signal quality, where the first cell includes at least one of the serving cell, the neighboring cell, and a target cell;
target information of the terminal and a time stamp corresponding to the target information, where the target information includes at least one of a velocity, a position, a direction, and beam information;
an identifier of a second cell and a time stamp corresponding to the identifier of the second cell, where the second cell includes at least one of the serving cell, the neighboring cell, and the target cell;
a condition type of the target condition;
a quantity of abnormal handover events; and
a ratio of the quantity of abnormal handover events to a total quantity of handovers.

Optionally, the first execution module 501 is further configured to: receive second configuration information from the network-side device, where the second configuration information is used for determining an applicable range of target model inference.

The second configuration information satisfies any one of the following:
the second configuration information is used for configuring a frequency, a cell, or a cell list to which the target model is applicable;
the second configuration information includes first information, second information, and third information, or the second configuration information includes first information and second information, where the first information is used for configuring a plurality of cells, the second information is used for activating at least part of the plurality of cells, and the third information indicates a cell that is in the activated cells and to which the target model is applicable;
the second configuration information includes fourth information, fifth information, and sixth information, or the second configuration information includes fourth information and fifth information, where the fourth information is used for configuring a plurality of cell lists, the fifth information is used for activating at least part of the plurality of cell lists, and the sixth information indicates a cell list that is in the activated cell lists and to which the target model is applicable;
the second configuration information is used for configuring at least one of the serving cell and first M neighboring cells ranked in descending order of predicted signal quality, to which the target model is applicable;
the second configuration information is used for configuring an intra-frequency cell to which the target model is applicable; and
the second configuration information is used for configuring first P neighboring cells of intra-frequency cells and inter-frequency cells that are ranked in descending order of signal quality, to which the target model is applicable, where P is a positive integer.

Optionally, the cell list includes at least one of the following: a list of cells within a radio access network-based notification area RNA; a list of cells within a tracking area TA; candidate cells for conditional handover CHO; a list of candidate cells for conditional Pscell addition or change CPAC; and a list of candidate cells for L1/L2-triggered mobility LTM.

Optionally, the first execution module 501 is further configured to: receive second data from the network-side device, where the second data is input data of the target model, and the second data includes at least one of the following:
position information of the network-side device;
an antenna orientation of the network-side device;
a beam orientation of the network-side device;
a beam width of the network-side device; and
an identifier associated with a transmission beam of the network-side device.

Optionally, the first execution module 501 is further configured to: receive third information from the network-side device, where the third configuration information is used for configuring the target model.

Refer to FIG. 6. Embodiments of this application further provide a data processing apparatus. As shown in FIG. 6, a data processing apparatus 600 includes:
a second execution module 601, configured to perform a second operation, where the second operation includes at least one of the following:
sending first configuration information to a terminal, where the first configuration information is used for configuring a data collection condition for performing first data collection;
sending a reporting condition to the terminal, where the reporting condition is used for triggering the terminal to report collected first data; and
sending a model inference condition to the terminal, where the model inference condition is used for triggering the terminal to perform model inference based on a target model; and
the first data is used for training an artificial intelligence AI model, to obtain the target model.

Optionally, the reporting condition includes at least one the following:
a target timer expires, where the target timer is started or restarted in a case that at least one target condition in the data collection condition is satisfied, and running duration of the target timer indicates continuous collection duration of the first data;
a data volume of the collected first data is greater than a preset threshold;
the network-side device indicates that reporting is based on implementation of the terminal;
cell selection occurs;
cell re-selection occurs;
cell handover occurs;
RRC connection establishment occurs;
RRC re-establishment occurs;
RRC connection resume occurs;
N handover failures or N abnormal handover events occur, where N is a positive integer; and
the terminal leaves a cell list configured by the network-side device.

Optionally, the cell list refers to a list used for controlling a reporting area of the first data.

Optionally, at least one of the data collection condition and the model inference condition includes at least one of the following:
a position of the terminal falls within a preset range;
an average velocity of the terminal exceeds a first threshold or falls within a first range in a configured time window;
a velocity of the terminal continuously exceeds a second threshold or falls within a second range in the configured time window;
signal quality of a serving cell is less than or equal to a third threshold or falls within a third range;
signal quality of a neighboring cell is greater than or equal to a fourth threshold or falls within a fourth range;
the signal quality of the neighboring cell is higher than the signal quality of the serving cell, and a difference between the signal quality of the neighboring cell and the signal quality of the serving cell is greater than or equal to a fifth threshold or falls within a fifth range;
average signal quality of the serving cell is less than or equal to a sixth threshold or falls within a sixth range in the configured time window;
average signal quality of the neighboring cell is greater than or equal to a seventh threshold or falls within a seventh range in the configured time window;
the average signal quality of the neighboring cell is higher than the average signal quality of the serving cell in the configured time window, and a difference between the average signal quality of the neighboring cell and the average signal quality of the serving cell is greater than or equal to an eighth threshold or falls within an eighth range;
the signal quality of the serving cell is continuously less than a ninth threshold or falls within a ninth range in the configured time window;
the signal quality of the neighboring cell is continuously less than a tenth threshold or falls within a tenth range in the configured time window;
a quantity of abnormal handover events that occur on the terminal is greater than or equal to an eleventh threshold in the configured time window;
a ratio of the quantity of abnormal handover events that occur on the terminal to a total quantity of handovers is greater than or equal to a twelfth threshold in the configured time window;
the signal quality of the serving cell for the terminal drops by X dB in the configured time window; and
the signal quality of the neighboring cell for the terminal rises by Y dB in the configured time window.

Optionally, the collection stopping condition for the first data includes at least one of the following:
the target condition is not satisfied; and
the target timer expires, where the target timer is started or restarted in a case that the target condition is satisfied, and the running duration of the target timer indicates the continuous collection duration of the first data.

Optionally, the first data includes at least one of the following:
signal quality of a first cell and a time stamp corresponding to the signal quality, where the first cell includes at least one of the serving cell, the neighboring cell, and a target cell;
target information of the terminal and a time stamp corresponding to the target information, where the target information includes at least one of a velocity, a position, a direction, and beam information;
an identifier of a second cell and a time stamp corresponding to the identifier of the second cell, where the second cell includes at least one of the serving cell, the neighboring cell, and the target cell;
a condition type of the target condition;
a quantity of abnormal handover events; and
a ratio of the quantity of abnormal handover events to a total quantity of handovers.

Optionally, the second execution module 601 is further configured to: send second configuration information to the terminal, where the second configuration information is used for determining an applicable range of target model inference.

The second configuration information satisfies any one of the following:
the second configuration information is used for configuring a frequency, a cell, or a cell list to which the target model is applicable;
the second configuration information includes first information, second information, and third information, or the second configuration information includes first information and second information, where the first information is used for configuring a plurality of cells, the second information is used for activating at least part of the plurality of cells, and the third information indicates a cell that is in the activated cells and to which the target model is applicable;
the second configuration information includes fourth information, fifth information, and sixth information, where the fourth information is used for configuring a plurality of cell lists, the fifth information is used for activating at least part of the plurality of cell lists, and the sixth information indicates a cell list that is in the activated cell lists and to which the target model is applicable;
the second configuration information is used for configuring at least one of the serving cell and first M neighboring cells ranked in descending order of predicted signal quality, to which the target model is applicable;
the second configuration information is used for configuring an intra-frequency cell to which the target model is applicable; and
the second configuration information is used for configuring first P neighboring cells of intra-frequency cells and inter-frequency cells that are ranked in descending order of signal quality, to which the target model is applicable, where P is a positive integer.

Optionally, the cell list includes at least one of the following: a list of cells within a radio access network-based notification area RNA; a list of cells within a tracking area TA; candidate cells for conditional handover CHO; a list of candidate cells for conditional Pscell addition or change CPAC; and a list of candidate cells for L1/L2-triggered mobility LTM.

Optionally, the second execution module 601 is further configured to: send second data to the terminal, where the second data is input data of the target model, and the second data includes at least one of the following:
position information of the network-side device;
an antenna orientation of the network-side device;
a beam orientation of the network-side device;
a beam width of the network-side device; and
an identifier associated with a transmission beam of the network-side device.

Optionally, the second execution module 601 is further configured to: send third configuration information to the terminal, where the third configuration information is used for configuring the target model.

The data processing apparatus in embodiments of this application may be an electronic device, such as an electronic device having an operating system, or may be a component in an electronic device, such as an integrated circuit or a chip. The electronic device may be a terminal, or may be another device other than a terminal. For example, the terminal may include, but is not limited to, types of the terminal 11 listed above. The another device may be a server, a network attached storage (Network Attached Storage, NAS), or the like. This is not specifically limited in embodiments of this application.

The data processing apparatus provided in embodiments of this application can implement processes implemented in the method embodiments shown in FIG. 3 and FIG. 4, and achieve the same technical effects. To avoid repetition, details are not described herein again.

As shown in FIG. 7, embodiments of the disclosure further provide a communication device 700, including a processor 701 and a memory 702. The memory 702 stores a program or instructions runnable on the processor 701. The program or instructions, when executed by the processor 701, implement the steps in the embodiments of the data processing method, to achieve the same technical effects. To avoid repetition, details are not described herein again.

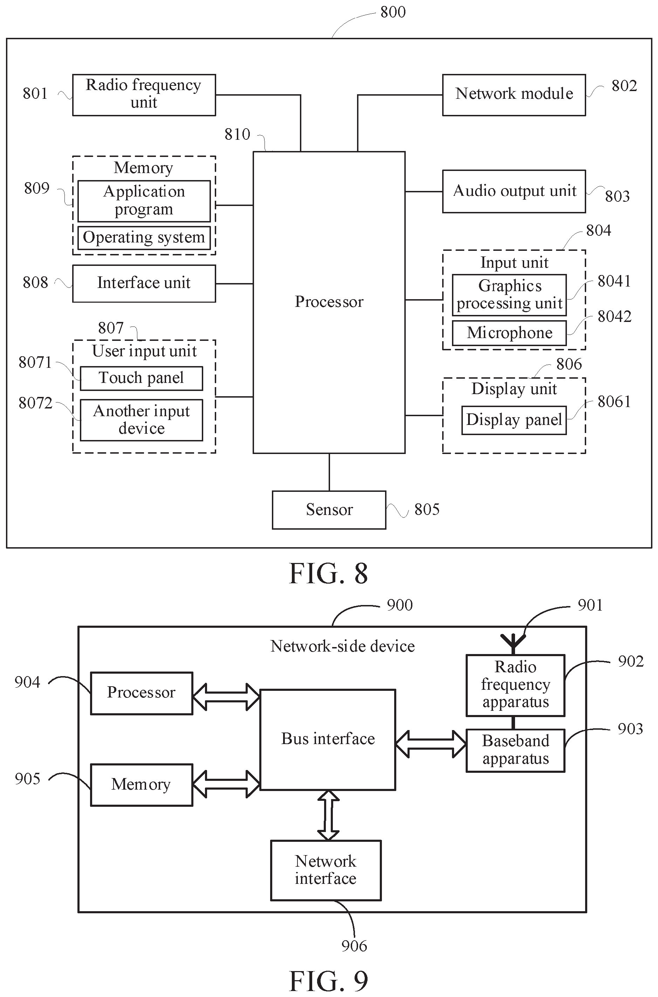

Embodiments of this application further provide a terminal, including a processor and a communication interface. The communication interface is coupled to the processor. The processor is configured to run a program or instructions, to implement the steps in the method embodiment shown in FIG. 3. The terminal embodiments corresponds to the foregoing method embodiments for the terminal side. Implementation processes and implementations of the foregoing method embodiments all may be applied to the terminal embodiments, to achieve the same technical effects. Specifically, FIG. 8 is a diagram of a hardware structure of a terminal according to an embodiment of this application.

A terminal 800 includes, but is not limited to, at least part of components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (such as a battery) for supplying power to the components. The power supply may be logically connected to the processor 810 via a power management system, thereby implementing functions such as charging, discharging, and power consumption management through the power management system. The terminal structure shown in FIG. 8 constitutes no limitation on the terminal. The terminal may include more or fewer components than those shown in the figure, or some components are combined, or a different component deployment is used. Details are not described herein again.

It should be understood that, in embodiments of this application, the input unit 804 may include a graphics processing unit (Graphics Processing Unit, GPU) 8041 and a microphone 8042. The graphics processing unit 8041 performs processing on image data of a static picture or a video that is obtained by an image obtaining apparatus (such as a camera) in a video obtaining mode or an image obtaining mode. The display unit 806 may include a display panel 8061, which may be configured in the form of a liquid crystal display, an organic light-emitting diode, or the like. The user input unit 807 includes at least one of a touch panel 8071 and another input device 8072. The touch panel 8071 is also referred to as a touchscreen. The touch panel 8071 may include two parts: a touch detection apparatus and a touch controller. The another input device 8072 may include, but is not limited to, a physical keyboard, a functional button (such as a volume control button or a switch button), a track ball, a mouse, or a joystick. Details are not described herein again.

In embodiments of this application, after receiving downlink data from a network-side device, the radio frequency unit 801 may transmit the data to the processor 810 for processing. In addition, the radio frequency unit 801 may send uplink data to the network-side device. Typically, the radio frequency unit 801 includes, but is not limited to, an antenna, an amplifier, a transceiver, a coupler, a low noise amplifier, a duplexer, and the like.

The memory 809 may be configured to store a software program or instructions and various data. The memory 809 may primarily include a first storage region for storing a program or instructions and a second storage region for storing data. The first storage region may store an operating system, an application program or instructions required by at least one function (such as a sound playback function and an image playback function), and the like. In addition, the memory 809 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), or a direct rambus RAM (Direct Rambus RAM, DRRAM). In embodiments of this application, the memory 809 includes, but is not limited to, these memories and any other memory of a suitable type.

The processor 810 may include one or more processing units. Optionally, the processor 810 integrates an application processor and a modem processor. The application processor primarily processes operations related to an operating system, a user interface, an application program, and the like. The modem processor primarily processes a radio communication signal, such as a baseband processor. It may be understood that the modem processor may not be integrated into the processor 810.

The radio frequency unit 810 is configured to perform a first operation, where the first operation includes at least one of the following:
receiving first configuration information from a network-side device, and collecting first data in a case that at least one target condition in a data collection condition is satisfied, where the first configuration information is used for configuring the data collection condition;
receiving a reporting condition from the network-side device, and reporting, based on the reporting condition, the first data collected by the terminal to the network-side device; and
performing model inference based on a target model in a case that a model inference condition is satisfied, where
the first data is used for training an artificial intelligence AI model, to obtain the target model.

It may be understood that the implementation process of the implementation mentioned in this embodiment may refer to the relevant description of the method embodiments for the terminal side, and the same or corresponding technical effects are achieved. To avoid repetition, details are not described herein again.

Embodiments of this application further provide a network-side device, including a processor and a communication interface. The communication interface is coupled to the processor, and the processor is configured to run a program or instructions, to implement the steps in the method embodiment shown in FIG. 4. The network-side device embodiments correspond to the foregoing method embodiments for the network-side device. Implementation process and implementations of the foregoing method embodiments all may be applied to the network-side device embodiments, to achieve the same technical effects.

Specifically, embodiments of this application further provide a network-side device. As shown in FIG. 9, a network-side device 900 includes: an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information via the antenna 901, and sends the received information to the baseband apparatus 903 for processing. In a downlink direction, the baseband apparatus 903 processes to-be-sent information and send the information to the radio frequency apparatus 902. The radio frequency apparatus 902 processes received information and sends the information via the antenna 901.

The method performed by the network-side device in the foregoing embodiments may be implemented in the baseband apparatus 903, and the baseband apparatus 903 includes a baseband processor.

The baseband apparatus 903 may include, for example, at least one baseband board. A plurality of chips are disposed on the baseband board. As shown in FIG. 9, one chip is, for example, the baseband processor, and is connected to the memory 905 via a bus interface, to invoke a program in the memory 905, and perform network-side device operations shown in the foregoing method embodiments.

The network-side device may further include a network interface 906. The interface is, for example, a common public radio interface (Common Public Radio Interface, CPRI).

Specifically, in embodiments of this application, the network-side device 900 further includes: instructions or a program stored in the memory 905 and runnable on the processor 904. The processor 904 invokes the instructions or the program in the memory 905 to perform the method performed by the modules shown in FIG. 7, and the same technical effects are achieved. To avoid repetition, details are not described herein again.

Embodiments of this application further provide a readable storage medium. The readable storage medium stores a program or instructions. The program or instructions, when executed by a processor, implement the processes in the foregoing embodiments of the data processing method, and the same technical effects can be achieved. To avoid repetition, details are not described herein again.

The processor is a processor in the terminal in the foregoing embodiments. The readable storage medium includes a computer-readable storage medium, such as a ROM, a RAM, a magnetic disk, or an optical disc. In some examples, the readable storage medium may be a non-transitory readable storage medium.

Embodiments of this application further provide a chip. The chip includes a processor and a communication interface. The communication interface is coupled to the processor. The processor is configured to run a program or instructions, to implement the processes in the foregoing embodiments of the data processing method, and the same technical effects can be achieved. To avoid repetition, details are not described herein again.

It should be understood that the chip mentioned in embodiments of this application may alternatively be referred to as a system-level chip, a system chip, a chip system, a system on chip, or the like.

Embodiments of this application further provide a computer program/program product. The computer program/program product is stored in a storage medium. The computer program/program product is executed by at least one processor to implement the processes in the foregoing embodiments of the data processing method, and the same technical effects can be achieved. To avoid repetition, details are not described herein again.

Embodiments of this application further provide a wireless communication system, including: a terminal and a network-side device. The terminal may be configured to perform the steps of the data processing method for the terminal side. The network-side device may be configured to perform the steps of the data processing method for the network-side device.

It should be noted that the terms "comprise", "include", or any other variations thereof herein are intended to cover non-exclusive inclusions, such that a process, method, article, or apparatus including a series of elements not only includes those elements, but also includes other elements that are not explicitly listed, or further includes inherent elements of such a process, method, article, or apparatus. An element preceded by a statement "includes a ..." does not, without more constraints, preclude the presence of additional identical elements in the process, method, article, or apparatus that includes the element. In addition, it should be noted that the scope of the method and apparatus in embodiments of this application is not limited to performing functions in an order shown or discussed, and may further include performing functions in a basically simultaneous manner or in a reverse order according to related functions. For example, the described method may be performed in an order different from the described order, and various steps may be added, omitted, or combined. In addition, features described with reference to some examples may be combined in other examples.

According to the descriptions of the foregoing implementations, a person skilled in the art may clearly understand that the method in the foregoing embodiments may be implemented by using a computer software product and a necessary universal hardware platform, or may certainly be implemented by using hardware. The computer software product is stored in a storage medium (such as a ROM, a RAM, a magnetic disk, or an optical disc), and includes several instructions, to enable a terminal or a network-side device to perform the methods described in embodiments of this application.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make implementations in many forms without departing from the spirit of this application and the protection scope of the claims, and all the implementations shall fall within the protection of this application.

## Claims

1. A data processing method, comprising:
performing, by a terminal, a first operation, wherein the first operation comprises at least one of the following:
receiving first configuration information from a network-side device, and collecting first data in a case that at least one target condition in a data collection condition is satisfied, wherein the first configuration information is used for configuring the data collection condition;
receiving a reporting condition from the network-side device, and reporting, based on the reporting condition, the first data collected by the terminal to the network-side device; and
performing model inference based on a target model in a case that a model inference condition is satisfied, wherein
the first data is used for training an artificial intelligence AI model, to obtain the target model.

2. The method according to claim 1, wherein the reporting condition comprises at least one of the following:
a target timer expires, wherein the target timer is started or restarted in a case that the target condition is satisfied, and running duration of the target timer indicates continuous collection duration of the first data;
a data volume of the collected first data is greater than a preset threshold;
the network-side device indicates that reporting is based on implementation of the terminal;
cell selection occurs;
cell re-selection occurs;
cell handover occurs;
RRC connection establishment occurs;
RRC re-establishment occurs;
RRC connection resume occurs;
N handover failures or N abnormal handover events occur, wherein N is a positive integer; and
the terminal leaves a cell list configured by the network-side device.

3. The method according to claim 2, wherein the cell list refers to a list used for controlling a reporting area of the first data.

4. The method according to any one of claims 1 to 3, wherein at least one of the data collection condition and the model inference condition comprises at least one of the following:
a position of the terminal falls within a preset range;
an average velocity of the terminal exceeds a first threshold or falls within a first range in a configured time window;
a velocity of the terminal continuously exceeds a second threshold or falls within a second range in the configured time window;
signal quality of a serving cell is less than or equal to a third threshold or falls within a third range;
signal quality of a neighboring cell is greater than or equal to a fourth threshold or falls within a fourth range;
the signal quality of the neighboring cell is higher than the signal quality of the serving cell, and a difference between the signal quality of the neighboring cell and the signal quality of the serving cell is greater than or equal to a fifth threshold or falls within a fifth range;
average signal quality of the serving cell is less than or equal to a sixth threshold or falls within a sixth range in the configured time window;
average signal quality of the neighboring cell is greater than or equal to a seventh threshold or falls within a seventh range in the configured time window;
the average signal quality of the neighboring cell is higher than the average signal quality of the serving cell in the configured time window, and a difference between the average signal quality of the neighboring cell and the average signal quality of the serving cell is greater than or equal to an eighth threshold or falls within an eighth range;
the signal quality of the serving cell is continuously less than a ninth threshold or falls within a ninth range in the configured time window;
the signal quality of the neighboring cell is continuously less than a tenth threshold or falls within a tenth range in the configured time window;
a quantity of abnormal handover events that occur on the terminal is greater than or equal to an eleventh threshold in the configured time window;
a ratio of the quantity of abnormal handover events that occur on the terminal to a total quantity of handovers is greater than or equal to a twelfth threshold in the configured time window;
the signal quality of the serving cell for the terminal drops by X dB in the configured time window; and
the signal quality of the neighboring cell for the terminal rises by Y dB in the configured time window.

5. The method according to any one of claims 1 to 4, further comprising:
stopping, by the terminal, collection of the first data when a collection stopping condition is satisfied, wherein the collection stopping condition comprises at least one of the following:
the target condition is not satisfied; and
the target timer expires, wherein the target timer is started or restarted in a case that the target condition is satisfied, and the running duration of the target timer indicates the continuous collection duration of the first data.

6. The method according to any one of claims 1 to 5, wherein the first data comprises at least one of the following:
signal quality of a first cell and a time stamp corresponding to the signal quality, wherein the first cell comprises at least one of the serving cell, the neighboring cell, and a target cell;
target information of the terminal and a time stamp corresponding to the target information, wherein the target information comprises at least one of a velocity, a position, a direction, and beam information;
an identifier of a second cell and a time stamp corresponding to the identifier of the second cell, wherein the second cell comprises at least one of the serving cell, the neighboring cell, and the target cell;
a condition type of the target condition;
a quantity of abnormal handover events; and
a ratio of the quantity of abnormal handover events to a total quantity of handovers.

7. The method according to any one of claims 1 to 6, wherein before the performing model inference based on the target model in a case that the model inference condition is satisfied, the method further comprises:
receiving, by the terminal, second configuration information from the network-side device, wherein the second configuration information is used for determining an applicable range of target model inference; and
the second configuration information satisfies any one of the following:
the second configuration information is used for configuring a frequency, a cell, or a cell list to which the target model is applicable;
the second configuration information comprises first information, second information, and third information, or the second configuration information comprises first information and second information, wherein the first information is used for configuring a plurality of cells, the second information is used for activating at least part of the plurality of cells, and the third information indicates a cell that is in the activated cells and to which the target model is applicable;
the second configuration information comprises fourth information, fifth information, and sixth information, or the second configuration information comprises fourth information and fifth information, wherein the fourth information is used for configuring a plurality of cell lists, the fifth information is used for activating at least part of the plurality of cell lists, and the sixth information indicates a cell list that is in the activated cell lists and to which the target model is applicable;
the second configuration information is used for configuring at least one of the serving cell and first M neighboring cells ranked in descending order of predicted signal quality, to which the target model is applicable;
the second configuration information is used for configuring an intra-frequency cell to which the target model is applicable; and
the second configuration information is used for configuring first P neighboring cells of intra-frequency cells and inter-frequency cells that are ranked in descending order of signal quality, to which the target model is applicable, wherein P is a positive integer.

8. The method according to claim 2 or 7, wherein the cell list comprises at least one of the following: a list of cells within a radio access network-based notification area RNA; a list of cells within a tracking area TA; candidate cells for conditional handover CHO; a list of candidate cells for conditional Pscell addition or change CPAC; and a list of candidate cells for L1/L2-triggered mobility LTM.

9. The method according to any one of claims 1 to 8, further comprising:
receiving, by the terminal, second data from the network-side device, wherein the second data is input data of the target model, and the second data comprises at least one of the following:
position information of the network-side device;
an antenna orientation of the network-side device;
a beam orientation of the network-side device;
a beam width of the network-side device; and
an identifier associated with a transmission beam of the network-side device.

10. The method according to any one of claims 1 to 9, wherein after the reporting, based on the reporting condition, the first data collected by the terminal to the network-side device, the method further comprises:
receiving, by the terminal, third information from the network-side device, wherein the third information is used for configuring the target model.

11. A data processing method, comprising:
performing, by a network-side device, a second operation, wherein the second operation comprises at least one of the following:
sending first configuration information to a terminal, wherein the first configuration information is used for configuring a data collection condition for performing first data collection;
sending a reporting condition to the terminal, wherein the reporting condition is used for triggering the terminal to report collected first data; and
sending a model inference condition to the terminal, wherein the model inference condition is used for triggering the terminal to perform model inference based on a target model; and
the first data is used for training an artificial intelligence AI model, to obtain the target model.

12. The method according to claim 11, further comprising:
sending, by the network-side device, second configuration information to the terminal, wherein the second configuration information is used for determining an applicable range of target model inference; and
the second configuration information satisfies any one of the following:
the second configuration information is used for configuring a frequency, a cell, or a cell list to which the target model is applicable;
the second configuration information comprises first information, second information, and third information, or the second configuration information comprises first information and second information, wherein the first information is used for configuring a plurality of cells, the second information is used for activating at least part of the plurality of cells, and the third information indicates a cell that is in the activated cells and to which the target model is applicable;
the second configuration information comprises fourth information, fifth information, and sixth information, wherein the fourth information is used for configuring a plurality of cell lists, the fifth information is used for activating at least part of the plurality of cell lists, and the sixth information indicates a cell list that is in the activated cell lists and to which the target model is applicable;
the second configuration information is used for configuring at least one of the serving cell and first M neighboring cells ranked in descending order of predicted signal quality, to which the target model is applicable;
the second configuration information is used for configuring an intra-frequency cell to which the target model is applicable; and
the second configuration information is used for configuring first P neighboring cells of intra-frequency cells and inter-frequency cells that are ranked in descending order of signal quality, to which the target model is applicable, wherein P is a positive integer.

13. The method according to claim 11 or 12, further comprising:
sending, by the network-side device, second data to the terminal, wherein the second data is input data of the target model, and the second data comprises at least one of the following:
position information of the network-side device;
an antenna orientation of the network-side device;
a beam orientation of the network-side device;
a beam width of the network-side device; and
an identifier associated with a transmission beam of the network-side device.

14. The method according to any one of claims 11 to 13, wherein after the sending the reporting condition to the terminal, the method further comprises:
sending, by the network-side device, third configuration information to the terminal, wherein the third configuration information is used for configuring the target model.

15. A data processing apparatus, comprising:
a first execution module, configured to perform a first operation, wherein the first operation comprises at least one of the following:
receiving first configuration information from a network-side device, and collecting first data in a case that at least one target condition in a data collection condition is satisfied, wherein the first configuration information is used for configuring the data collection condition;
receiving a reporting condition from the network-side device, and reporting, based on the reporting condition, the first data collected by a terminal to the network-side device; and
performing model inference based on a target model in a case that a model inference condition is satisfied, wherein
the first data is used for training an artificial intelligence AI model, to obtain the target model.

16. A data processing apparatus, comprising:
a second execution module, configured to perform a second operation, wherein the second operation comprises at least one of the following:
sending first configuration information to a terminal, wherein the first configuration information is used for configuring a data collection condition for performing first data collection;
sending a reporting condition to the terminal, wherein the reporting condition is used for triggering the terminal to report collected first data; and
sending a model inference condition to the terminal, wherein the model inference condition is used for triggering the terminal to perform model inference based on a target model; and
the first data is used for training an artificial intelligence AI model, to obtain the target model.

17. A terminal, comprising a processor and a memory, wherein the memory stores a program or instructions runnable on the processor, and the program or instructions, when executed by the processor, implement the steps of the data processing method according to any one of claims 1 to 10.

18. A network-side device, comprising a processor and a memory, wherein the memory stores a program or instructions runnable on the processor, and the program or instructions, when executed by the processor, implement the steps of the data processing method according to any one of claims 11 to 14.

19. A readable storage medium, wherein the readable storage medium stores a program or instructions, and the program or instructions, when executed by a processor, implement the steps of the data processing method according to any one of claims 1 to 14.
